# EUROPÄISCHE PATENTSCHRIFT

(11) **EP 2 435 808 B1**
(45) Veröffentlichungstag und Bekanntmachung des Hinweises auf die Patenterteilung: **16.11.2016**
(21) Anmeldenummer: 10721709.3
(22) Anmeldetag: 18.05.2010
(51) Int. Cl.: G01J 3/00, G01J 1/08, G01J 5/52, H05B 33/08, G01J 3/02, F21V 29/00, G01J 3/10, G01J 1/02

(54) **KALIBRIERLICHTQUELLE**
CALIBRATION LIGHT SOURCE
SOURCE LUMINEUSE DE CALIBRATION

(30) Priorität: 26.05.2009 DE 102009022611
(43) Veröffentlichungstag der Anmeldung: 04.04.2012
(73) Patentinhaber: Instrument Systems Optische Messtechnik Gmbh, 81673 München (DE)
(72) Erfinder: NÄGELE, Thomas, 86916 Kaufering (DE); HANNAK, Detlef, 85570 Markt Schwaben (DE); STURM, Simon, 81673 München (DE)
(74) Vertreter: Samson & Partner Patentanwälte mbB
(86) Internationale Anmeldenummer: PCT/EP2010/003033
(87) Internationale Veröffentlichungsnummer: WO 2010/136140

(56) Entgegenhaltungen:
- US-A1- 2005 270 776
- US-A1- 2006 139 630
- US-B1- 6 179 465

## Beschreibung

Die Erfindung betrifft eine Kalibrierstrahlungsquelle, insbesondere unter Verwendung einer LED (LED steht für Light Emitting Diode bzw. Leuchtdiode).

Kalibrierstrahlungsquellen werden unter anderem für die Absolutkalibrierung von Licht- oder Strahlungsmessgeräten, beispielsweise einem Spektrometer, Photometer oder Radiometer, eingesetzt. Es ist bekannt, strom- und temperaturstabilisierte Referenz-LEDs als Kalibrierstrahlungsquelle zu verwenden. LEDs können Strahlung im sichtbaren, infraroten oder ultravioletten Wellenlängenbereich emittieren. Für die Strahlungserzeugung der LEDs sorgt ein Halbleiterchip, der auf eine Platine montiert ist. Aufgrund der verschiedenen physikalischen Eigenschaften des zum Halbleiterbau verwendeten Materials können die erforderlichen Wellenlängen eingestellt werden.

Eine wesentliche Anforderung an Kalibrierstrahlungsquellen besteht in der hohen Stabilität der spektralen Strahlungsverteilung und Intensität. Bisher finden ausschließlich sogenannte Standard LEDs mit einem typischen Betriebsstrom von ca. 20 mA Verwendung. Die für den Einsatz als Kalibrierstrahlungsquelle erforderliche gleichbleibende Lichtleistung der LED wird durch eine konstante elektrische Leistung U_{F}*I_{F} erreicht (U_{F} = Vorwärtsspannung und I_{F} = Vorwärtsstrom). Dabei wird in der Regel eine stabile Stromquelle für die Stromeinspeisung I_{F} verwendet. Die Vorwärtsspannung U_{F}, die über dem Halbleiterchip abfällt, wird an den Anschlüssen der LED gemessen. Da sich die Vorwärtsspannung U_{F} der LED bei konstantem Strom I_{F} nur mit der Temperatur verändert, kann über eine Regelung der Temperatur des Bauteils die Vorwärtsspannung U_{F} und damit die abgestrahlte Lichtleistung stabilisiert werden. Der Arbeitspunkt, bei dem die LED betrieben wird, liegt in der Regel deutlich über der Umgebungstemperatur bei ca. 40°C. Für eine Chiptemperatur von ca. 40°C muss bei den bisher verwendeten Standard LEDs das Bauteil geheizt werden. Für diese Stabilisierung werden in der Regel Heizelemente in Form von Heizwiderständen, Heizdioden etc. verwendet. Über die Messung der Vorwärtsspannung U_{F} und eine entsprechende Anpassung der Heizleistung wird das Bauteil und damit der LED Chip auf einer konstanten Temperatur gehalten. Ein Nachteil der genannten Kalibrierstrahlungsquellen liegt in der geringen Lichtleistung, die mit den verwendeten Standard LEDs erzielt werden können.

Um eine Lambertsche Abstrahlcharakteristik der LED zu erreichen, sitzt ein Diffusor als Kappe vor der LED. Der Diffusor ist in ein Außengehäuse eingesetzt, das die Kalibrierstrahlungsquelle vor Umgebungseinflüssen abschirmt.

Allerdings beeinflusst auch die Umgebungstemperatur die von der Kalibrierstrahlungsquelle abgestrahlte Lichtleistung und das Strahlungsspektrum (LED-Farbe). So können bei bekannten Kalibrierstrahlungsquellen schnelle Schwankungen der Umgebungstemperatur selbst mit einer aktiven Temperatursteuerung der LED-Temperatur nicht schnell genug kompensiert werden, was zu unerwünschten zeitlichen Schwankungen der Lichtstärke der Kalibrierstrahlungsquelle führt.

Der Erfindung liegt die Aufgabe zugrunde, eine temperaturstabilere Kalibrierstrahlungsquelle bereitzustellen.

Sie löst diese Aufgabe mit dem Gegenstand des Anspruchs 1. Bevorzugte Ausführungsformen sind in den abhängigen Ansprüchen beschrieben.

Die Erfindung sowie weitere Merkmale und Vorteile der Erfindung werden nunmehr anhand der Beschreibung mit Bezug auf die beigefügte Zeichnung näher erläutert, in der:
Die US 2004/0120156 A1 beschreibt einen Hochleistungsscheinwerfer für Theaterbeleuchtungen o. dgl., bei dem eine wärmeleitende Trägerplatte mit darauf angeordneten Hochleistungs-LEDs über ein wärmeisolierendes Halterungselement mit dem Gehäuse mechanisch gekoppelt ist. Die von den Hochleistungs-LEDs erzeugte Wärme wird von der Trägerplatte aufgenommen und über in Öffnungen des Halterungselements angeordneten Peltierelementen in den Innenraum des Gehäuses abgeführt. Die Trägerplatte ist wärmeisolierend, um einen Rückfluß der Wärme vom Gehäuseinneren zu den LEDs zu vermeiden und letztere von der Gehäusewärme zu entkoppeln.
Die US 2008/0285271 A1 beschreibt eine Beleuchtungsquelle, in der eine Wärmeabfuhr der von den LEDs erzeugten Wärme dadurch erleichtert wird, dass die Öffnungen in das Gehäuseinnere genügend groß gemacht werden. Durch diese Öffnungen können dann unter Ausnutzung des Kamineffekts genügend große Luftkonvektionsströme für den Wärmeaustausch in das Gehäuseinnere fließen.
Die US 6,179,465 B1 zeigt eine Kalibrierstrahlungsquelle für ein Pyrometer. Ein Kalibrierungsblock mit einer Kavität und darin aufgenommener LED simuliert eine Schwarzkörperstrahlung und wird für die Kalibrierung des Pyrometers in Öffnungen eines Zentrierblocks eingesteckt. Dieser Zentrierblock wird in den Träger einer Substraterwärmvorrichtung so eingesetzt, dass die Kavitätsaustrittsöffnungen für die LED-Lichtstrahlung vollständig auf das Stirnende eines Lichtleiters abstrahlen.
Die US 2006/0139630 A1 zeigt eine im Gehäuse aufgenommenen, temperaturstabilisierte LED-Einheit mit einem Halterungselement und einer Abdeckscheibe.
Die US 2005/0270776 A1 zeigt eine temperaturstabilisierte LED-Kalibrierlichtquelle.

- Fig. 1: eine schematische Ansicht einer erfindungsgemäßen Kalibrierstrahlungsquelle ist;
- Fig. 2: einen vergrößerten Ausschnitt aus Fig. 1 im Bereich der High-Power LED zeigt;
- Fig. 3: ein Prinzipschaltbild für die Temperatursteuerung zeigt; und
- Fig. 4: eine schematische Ansicht einer alternativen Ausführung der High-Power LED zeigt.

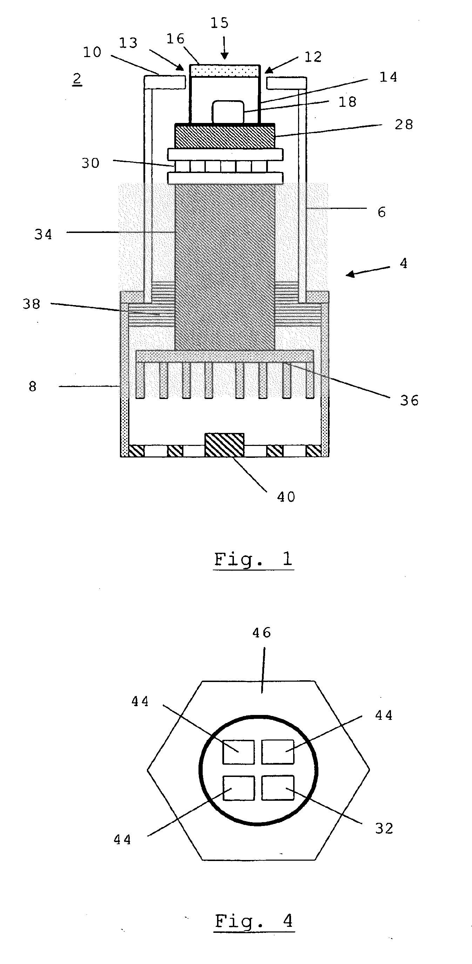

Fig. 1 zeigt eine schematische Ansicht einer erfindungsgemäßen Kalibrierstrahlungsquelle 2 mit einem Außengehäuse 4. Das Außengehäuse 4 setzt sich aus einem vorderen und einem hinteren hohlzylindrischem Gehäuseabschnitt 6 und 8 zusammen, die miteinander verschraubt sind. Die Bezeichnungen "vorne" und "hinten" beziehen sich hier auf die Ausstrahlrichtung des von der Strahlungsquelle erzeugten Lichtstrahls aus dem Gehäuse 4. Mit Lichtstrahl ist eine beispielsweise durch eine entsprechende optische und/oder mechanische Strahlführung gerichtete Strahlung im infraroten, sichtbaren und ultravioletten Bereich gemeint. Der vordere Gehäuseabschnitt 6 ist stirnseitig mit einer kreisförmigen Blendenfläche 10 verschlossen, die eine zentrale Öffnung 12 umfasst. Durch diese Öffnung 12 ragt ein starres Austrittsöffnungshalterungselement 14 mit vorzugsweise geschlossener, tubusförmiger Seitenwand (und ggf. verspiegelter Innenwand) und einer vorderen Lichtaustrittsöffnung 15 für den Auslass des von der Strahlungsquelle erzeugten Lichtstrahls. Das hintere, offene Ende des Halterungselement 14 ist an einer Befestigungsplatine 22 für eine High-Power LED 18 befestigt ist und nimmt diese LED 18 in sich auf.

In dem in Fig. 1 gezeigten Ausführungsbeispiel sitzt ein Diffusor 16 in der Lichtaustrittsöffnung 15. Der Diffusor 16 ist ein Volumenstreuer (im Gegensatz zu einem Oberflächenstreuer), der das Licht so homogen wie möglich in alle Raumrichtungen nach außen, vorzugsweise mit Lambertscher Abstrahlcharakteristik abstrahlt. Kalibriervorschriften geben die Abstrahlfläche des Diffusors 16 vor. In anderen nicht gezeigten Ausführungsbeispielen kann die Lichtaustrittsöffnung 15 auch offen sein oder durch ein sonstiges für den Lichtstrahl transparentes Material (z.B. eine Glasscheibe für den Lichtstrahl im sichtbaren Wellenlängenbereich) abgedeckt sein. Der Diffusor 16, das offene Loch (bzw. dessen stirnseitiger Innenrand) oder das sonstige transparente Material definieren eine bestimmte Apertur für den austretenden Lichtstrahl, und zwar in einem festen Abstand von der High-Power LED 18, und beeinflussen damit die Abstrahlcharakteristik der Kalibrierstrahlungsquelle. In dem Strahlengang zwischen Halbleiterstrahlungsquelle 18 und Lichtaustrittsöffnung 15 können weitere optische Elemente liegen.

Die sogenannte Hochleistungs- bzw. Hochstrom (High-Power bzw. High-Current) LED 18 ist eine Halbleiterlichtquelle mit hoher Versorgungsleistung (typisch mindestens 1 Watt bei einem Betriebsstrom von mindestens 350 mA und einer Chip-Kantenlänge von beispielsweise 1 mm), die einen Lichtstrom von mehreren Lumen erzeugen kann, im Vergleich zu nur einigen 10 Millilumen bei herkömmlichen LEDs. Die High-Power LED 18 wird vorzugsweise mit dem Ziel eingesetzt, eine ausreichende Lichtleistung für die Kalibrierung von Licht- bzw. Strahlungsmessgeräten bereitstellen zu können. Allerdings wird die aufgenommene elektrische Leistung insbesondere bei High-Power LEDs nur zum Teil in Licht umgewandelt, der Rest muss als Wärme abgeführt werden. Die deutlich höheren Leistungsdichten bei High Power LEDs machen eine aktive oder passive Kühlung des Bauteils notwendig. Zudem kann eine Stabilisierung der LED nicht mehr durch Zufuhr von weiterer Wärme erreicht werden.

Das Außengehäuse 4 und das Halterungselement 14 sind aus einem Material mit sehr geringer Wärmeleitfähigkeit hergestellt (beispielsweise ein geeigneter Kunststoff). Der Diffusor 16 kann aus einem gesinterten Quarzglas hergestellt sein, das beispielsweise in das Kunststoffmaterial des Halterungselements 14 eingeklebt ist. Anstelle des oder zusätzlich zum Diffusor 16 kann ein in den Figuren nicht gezeigtes optisch transparentes Fenster aus Glas, Quarz oder einem anderen optisch transparenten Material in der Lichtaustrittsöffnung 15 sitzen. In der gezeigten Ausführungsform steht das Halterungselement 14 mit Diffusor 16 etwas aus der Öffnung 12 über die Blendenfläche 10 nach außen vor, alternativ kann es aber auch bündig mit der Blendenfläche 10 abschließen. Zwischen der zylindrischen Außenwand des Halterungselements 14 und dem kreisförmigen Innenrand der Öffnung 12 befindet sich ein geringer Ringspalt 13, der eine Wärmeausdehnung des Außengehäuses 4 erlaubt, ohne dass der Innenrand mit dem Halterungselement 14 in Kontakt kommt. Der Ringspalt 13 kann beispielsweise mit einer nachgiebigen Silikondichtung abgedichtet sein, um den Innenraum des Außengehäuses 4 gegen äußere Einflüsse abzudichten. Im übrigen ist das Halterungselement 14 zur Vermeidung der Übertragung von beispielsweise wärmebedingten Längenänderungen vom Außengehäuse 4 mechanisch entkoppelt. Das Halterungselement 14 durchsetzt das Außengehäuse 4 also kräftefrei bzw. ist gegenüber dem Außengehäuse 4 frei beweglich. Der Ringspalt 13 definiert einen Abstand zwischen Außengehäuse 4 und Halterungselement 14, der mit einem wärmeisolierenden Luftpolster gefüllt ist (ggf. kann der Leeraum im Ringspalt auch mit einem anderen wärmeisolierenden Material gefüllt sein, solange die mechanische Entkopplung und damit die freie Beweglichkeit soweit sichergestellt sind, dass die vom Außengehäuse 4 auf das Halterungselement 14 wirkenden Kräfte vernachlässigbar sind). Dieser Abstand ist wenigstens so bemessen, dass beispielsweise durch Umgebungstemperaturschwankungen bedingte Längenänderungen des Außengehäuses 4 nicht auf das Halterungselement 14 wirken, und damit also das Halterungselement 14 samt daran gekoppelter High-Power LED 18 mechanisch vom Außengehäuse 4 freigestellt bleibt.

Diese mechanische Entkopplung stellt nämlich sicher, dass sich die Lichtaustrittsöffnung 15 in einem konstanten Abstand von der Halbleiterstrahlungsquelle 18 befindet und damit der von letzterer abgestrahlte Lichtstrom ebenfalls konstant ist. So bestimmt nämlich der Abstand von Lichtaustrittsöffnung 15 zur Halbleiterstrahlungsquelle 18 den Öffnungswinkel für die aus dieser Öffnung 15 austretende Lichtstrahlung, und damit den aus dieser Öffnung 15 austretenden Lichtstrom. Selbstverständlich ist das Halterungselement 14 indirekt am Außengehäuse 4 aufgehängt, wie weiter unten im Detail beschrieben wird. Die mechanische Entkopplung betrifft also lediglich die Vermeidung einer direkten mechanischen Kopplung und die damit einhergehende direkte Kräfteübertragung zwischen diesen beiden Elementen, insbesondere bei Temperaturänderungen.

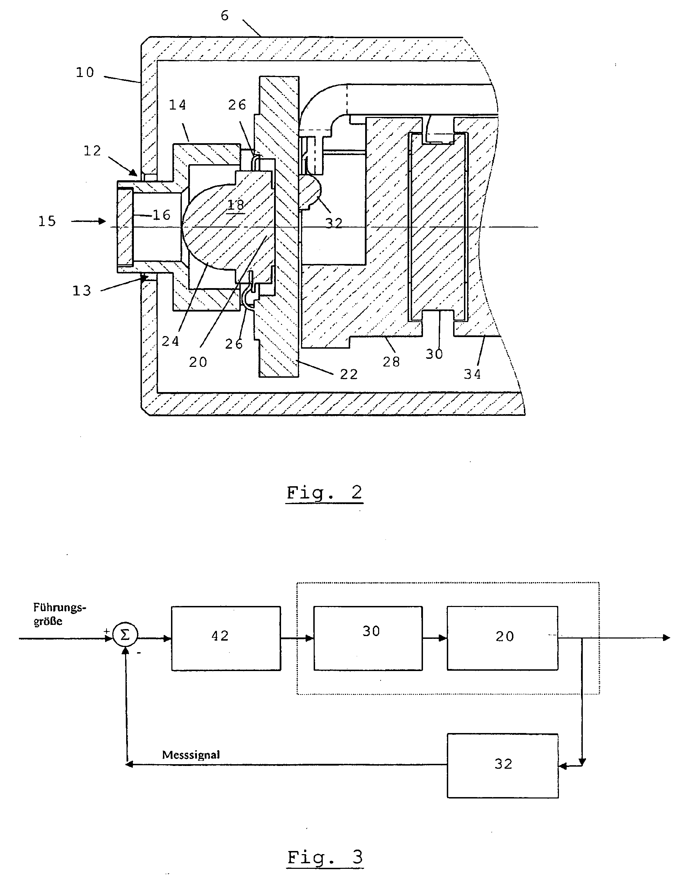

In dem vergrößerten Ausschnitt der Fig. 2 ist der Aufbau und die Halterung der High-Power LED 18 genauer gezeigt. Der LED-Chip 20 sitzt auf einer speziellen wärmeleitfähigen Platine 22, z.B. eine Metallkernleiter - oder Keramikplatine. Auf dem LED-Chip 20 kann ein Linsenkörper 24 aufgesetzt sein, der das erzeugte Licht in Richtung des Diffusors 16 bzw. der Lichtaustrittsöffnung 15 bündelt. Bonddrähte 26 verbinden den LED-Chip 20 elektrisch mit der Platine 22, von der wiederum nicht gezeigte Verbindungsleitungen an einen ebenfalls nicht gezeigten elektrischen Anschluss der Kalibrierstrahlungsquelle 2 führen. Das Halterungselement 14 ist direkt durch Verklebung seines unteren Endes mit der Oberseite der Platine 22 mit letzterer verbunden. Alternativ kann es auch indirekt mit der Platine 22 verbunden sein, indem der Innenrand seines unteren Endes seitlich am Linsenkörper 24 oder am LED-Chip 20 oder es sonst wie indirekt an der Platine 22 befestigt ist. Es dient hauptsächlich dazu, einen Abstand des Linsenkörpers 24 (bzw. des LED Chips 20 bei nicht-vorhandenem Linsenkörper 24) zur Lichtaustrittsöffnung 15 bzw. Diffusor 16 konstant zu halten, da dieser Abstand den Lichtstrom bzw. die Lichtstärke der Kalibrierstrahlungsquelle 2 beeinflusst.

Da die Stromdichte der High-Power LED 18 im Vergleich zu normalen LEDs um den Faktor 20 bis 50 mal höher ist, können sich die Übergangswiderstände am Bonddraht 26 ändern. Daher ist in manchen Fällen die gewöhnlich zur Leistungsversorgung der High-Power LED 18 einzustellende, über den elektrischen Anschlüssen der High-Power LED 18 gemessene Vorwärtsspannung nicht als Stellgröße für die Stabilisierung der High-Power LED 18 geeignet. Als Stellgröße wird die Temperatur herangezogen, wie nachfolgend im Detail beschrieben, und auf einen konstanten Wert stabilisiert. Damit bleibt der Abfall der Vorwärtsspannung über dem p/n-Übergang des LED-Chips 20 bei konstantem Versorgungsstrom ebenfalls konstant, und die elektrische und optische Leistung (ausgestrahlte Lichtstärke und Strahlungsspektrum) der High-Power LED 18 ist stabilisiert. Die Vorwärtsspannung U_{F} ist eine Funktion der Temperatur und des Stromes I_{F}. Ein typischer Temperaturkoeffizient für die Vorwärtsspannung bei konstantem Strom beträgt ca. -1,5 bis -2,5 mV/K. Somit ist bei höheren Temperaturen und konstantem Strom I_{F} die Vorwärtsspannung niedriger. Damit sinkt die abgestrahlte Lichtleistung mit steigender Chip-Temperatur des LED-Chips 20. Zudem ändert sich auch dessen Strahlungsspektrum (Farbe).

Die genannte Temperaturstabilisierung dient auch einem Wärmeschutz der High-Power LED 18. Mit elektrischen Leistungen von mehreren Watt (z.B. 5 W bei 2 A maximalem Betriebsstrom) erzeugt die High-Power LED 18 nämlich neben einer hohen Lichtausbeute auch eine erhöhte Verlustleistung, die zu einer starken Erwärmung des LED Chips 20 führt. Diese Verlustleistung muss abgeführt werden, um eine Reduzierung der Lebensdauer oder gar Zerstörung des LED-Chips 20 zu verhindern.

Die Temperierung des LED-Chips 20 erfolgt über einen gut wärmeleitenden ersten Stempel 28 aus Kupfer-Zirkonium (oder aus einem anderen gut wärmeleitenden Material), dessen vorderes Ende an die Unterseite der Platine 22 und dessen hinteres Ende an die Kälteseite eines Peltierelement 30 geklebt ist. Die hohe Wärmeleitfähigkeit des ersten Stempels 28 und das zum Einsatz kommende Peltierelement 30 (mit beispielsweise mehreren 10W Kühl-/Heizleistung) ermöglichen eine rasche Einstellung der gewünschten Temperatur am LED-Chip 20 in einem Bereich zwischen +5°C und +85°C, vorzugsweise über dem Taupunkt zur Vermeidung einer Taubildung, besonders vorzugsweise zwischen +25°C und +35°C, und ganz besonders bevorzugt auf ca. +30°C. In den ersten Stempel 28 ist ferner unterhalb seiner Auflagefläche für die Platine 22 ein Temperatursensor 32 in einem in den Stempel 28 eingefrästen Hohlraum eingelassen. Alternativ kann der Temperatursensor 32 auch oberhalb der Platine 22 unmittelbar neben dem LED-Chip 20 angeordnet sein. Er sollte so nah wie möglich an den LED-Chip 20 gebracht werden, damit seine gemessene Temperatur mit derjenigen des LED-Chips 20 übereinstimmt.

Die Wärmeseite des Peltierelements 30 ist an das vordere Ende eines zweiten Stempel 34 aus Kupfer-Zirkonium (oder aus einem anderen gut wärmeleitenden Material) geklebt, an dessen hinteres Ende ein Kühlkörper 36 mit einer vergrößerten Wärmeaustauschoberfläche geschraubt ist. Das hintere Ende des zweiten Stempels 34 ist mittels eines wärmeisolierenden Halters 38 an der Gehäuseinnenwand des vorderen Gehäuseabschnitts 6 gehaltert. Damit ist die gesamte Anordnung bestehend aus Diffusor 16, Halterungselement 14, Platine 22, LED Chip 20, erster Stempel 28, Peltierelement 30 und zweiter Stempel 34 nur über diesen Halter 38 mit dem Außengehäuse 4 verbunden und damit der Wärmeübertrag von der Umgebungstemperatur auf diese Anordnung stark gedämpft.

Der Kühlkörper 36 gibt seine Wärme an die im hinteren Gehäuseabschnitt 8 befindliche Umgebungsluft ab, deren Wärme von einem elektrischen Lüfter 40 am hinteren offenen Ende des Gehäuseabschnitts 8 an die Außenluft abgeführt wird. Mit diesen Maßnahmen wird die Verlustleistung des LED-Chips 20 effizient abtransportiert.

Der erste Stempel 28 ist so dimensioniert, dass einerseits die Wärmeseite des Peltierelements 30 genügend weit vom LED Chip 20 entfernt ist, um die dort erzeugte Wärme (entsprechend der abzuführenden Verlustleistung von einigen Watt) vom LED Chip 20 fernzuhalten, andererseits aber noch genügend nahe zum LED-Chip 20 ist, damit der Wärmeaustausch ausreichend schnell erfolgt (vorzugsweise im Millisekundenbereich).

Für die Temperaturregelung wird, wie in Fig. 3 schematisch gezeigt, das Messsignal des Temperatursensors 32 einem (PID)-Regler 42 zugeführt, der die gemessene Temperatur mit einem vorgegebenen Temperaturwert (Führungsgröße) vergleicht. Abhängig vom Vergleichsergebnis erhöht oder erniedrigt der Regler 42 die dem Peltierelement 30 zuzuführende elektrische Leistung. Hierzu sind der Temperatursensor 32 ebenso wie das Peltierelement 30 mit dem Regler 42 über nicht gezeigte Verbindungsleitungen elektrisch verbunden. Die Reglerparameter des Reglers 42 sind so gewählt, dass beispielsweise eine Einstellgenauigkeit von 0,01°C gewährleistet ist.

Durch die Einhausung der High-Power LED 18 in das gering wärmeleitende Kunstoffgehäuse 4 werden Temperaturänderungen der Umgebung soweit gedämpft, dass eine ausreichende Regelgenauigkeit und -geschwindigkeit erreicht wird. Ohne eine solche Einhausung wäre nämlich der Entwärmungspfad vom LED-Chip 20 bis zum Peltierelement 30 zu träge, um Störeinflüssen schnell genug begegnen zu können. Durch die mechanische und thermische Entkopplung der Lichtaustrittsöffnung 15 (bzw. des Diffusors 16) vom Außengehäuse 4 und deren starre Halterung am LED Chip 20 übertragen sich temperaturbedingte Längenänderung des Außengehäuses 4 nicht auf den Abstand der Lichtaustrittsöffnung (bzw. des Diffusors 16) von der High-Power LED 18 und damit nicht auf den von der Kalibrierstrahlungsquelle 2 ausgegebenen Lichtstrom. Diese Maßnahme führt zur erforderlichen Stabilität des Lichtstromes von weniger als 0,1% in einem Umgebungstemperaturbereich von 20°C bis 30°C. Das Halterungselement 14 ist derart am Außengehäuse 4 aufgehängt, dass der Kräftefluss zwischen diesen beiden Elementen über die Platine 22, den ersten Stempel 28, das Peltierelement 30, den zweiten Stempel 34 und den Kühlkörper 36 erfolgt.

Eine so stabilisierte Lichtquelle kann als Transfernormal für verschiedene photometrische oder radiometrische Größen dienen. Typische Größen sind der Gesamtlichtstrom oder die gesamte Strahlungsleistung sowie die Averaged LED Intensity nach CIE127:2007.

Fig. 4 zeigt eine alternative Ausführung der High-Power LED 18 in Form eines auf der Platine 22 angeordneten Chip Arrays 46 aus drei verschiedenfarbigen High-Power LED-Elementen 44, mit denen über eine Farbmischung eine beliebige Farbe eingestellt werden kann, und aus dem Temperatursensor 32.

Anstelle der High-Power LED 18 kann auch eine Standard oder High-Brightness LED verwendet werden. Das Peltierelement 30 kann die LED-Temperatur dann auf einen konstanten Wert erwärmen, der oberhalb der Umgebungstemperatur liegt, beispielsweise auf 40°C. Anstelle des Peltierelements 30 kann die LED auch direkt über ihre Bonddrähte erwärmt werden, die als Widerstandsheizung geschaltet werden. Alternativ kann auch keine aktive Temperatustabilisierung vorgesehen werden. In diesem Fall stabilisiert sich die Temperatur selbständig nach einer gewissen Zeit auf einen Temperaturwert, wenn eine konstante Vorwärtsspannung U_{F} erreicht ist. Dann ist auch die verbrauchte elektrische Leistung und damit die abgegebene Lichtleistung und Verlustleistung stabil. Alternativ zur beschriebenen Konstantstromversorgung kann die LED auch mit veränderlichem Strom betrieben werden. Dann führt die Strommodulation zu einer Temperaturfluktuation. So kann die LED mit einem hohen Pulsstrom versorgt werde, der periodisch an- und ausgeschaltet wird. Als Halbleiterstrahlungsquelle kann auch eine OLED (organische Lumineszenzdiode) oder ein Halbleiterlaser verwenden werden.

Die Anmelderin behält sich vor, auf die Idee der Temperaturstabilisierung der Kalibrierstrahlungsquelle mit High-Power LED 18 bei Konstantstromversorgung einen eigenen Schutz zu richten, unabhängig von der Entkopplung der Lichtaustrittöffnung 15 vom Außengehäuse 2.

## Patentansprüche

1. Kalibrierlichtquelle, (2) mit:
einem Gehäuse (4) mit einer Öffnung (12),
einem im Gehäuse (4) aufgenommenen Träger (22),
einer vom Träger (22) getragenen Halbleiterlichtquelle (18) zum Erzeugen eines Lichtstrahls,
einem am Träger (22) der Halbleiterlichtquelle (18) befestigten Austrittsöffnungshalterungselement (14) mit einer im Bereich der Öffnung (12) angeordneten, als Apertur wirkenden Lichtaustrittsöffnung (15), durch die der von der Halbleiterlichtquelle (18) erzeugte Lichtstrahl nach außen aus dem Gehäuse (4) abgestrahlt wird,
einer mit dem Träger (22) verbundenen und im Gehäuse (4) aufgenommenen aktiven Kühlvorrichtung (30) zum Kühlen der Halbleiterlichtquelle (18),
einem im Gehäuse (4) aufgenommenen ersten wärmeleitenden Verbindungselement (28), das die Kühlseite der Kühlvorrichtung (30) mit dem Träger (22) der Halbleiterlichtquelle (18) verbindet und die Wärme von der Halbleiterlichtquelle (18) zur Kühlvorrichtung (30) abführt, und
einem im Gehäuse (4) aufgenommenen zweiten wärmeleitenden Verbindungselement (34), das mit der Wärmeseite der Kühlvorrichtung (30) verbunden ist,
wobei das zweite Verbindungselement (34) mittels eines wärmeisolierenden Halters (38) am Gehäuse (4) gehaltert ist, und
wobei das Austrittsöffnungshalterungselement (14) und die Halbleiterlichtquelle (18) vom Gehäuse (4) mechanisch und thermisch entkoppelt sind.

2. Kalibrierlichtquelle nach Anspruch 1, bei der ein Diffusor (12) in der Lichtaustrittsöffnung (15) sitzt.

3. Kalibrierlichtquelle nach Anspruch 1 oder 2, bei der die Halbleiterlichtquelle (18) eine High-Power LED umfasst.

4. Kalibrierlichtquelle nach einem der Ansprüche 1 bis 3, ferner mit:
einem am von der Kühlvorrichtung (30) abgewandten Ende des zweiten Verbindungselements (34) verbundenen Kühlkörper (36) mit einer vergrößerten Wärmeaustauchoberfläche zum Abgeben der Wärme an die Umgebungsluft, und
einem Lüfter (40) zum Abführen der erwärmten Umgebungsluft vom Kühlkörper (36).

5. Kalibrierlichtquelle nach einem der vorhergehenden Ansprüche, bei dem das Gehäuse (4) und das Austrittsöffnungshalterungselement (14) aus einem gut wärmeisolierenden Material sind.

6. Kalibrierlichtquelle nach einem der vorhergehenden Ansprüche, ferner mit:
einem in unmittelbarer Nähe zur Halbleiterlichtquelle (18) angeordneten Temperatursensor (32) zum Messen der Temperatur der Halbleiterlichtquelle (18), und
einer Temperaturregelvorrichtung (42) zum Regeln der Leistung der aktiven Kühlvorrichtung (30) abhängig von der vom Temperatursensor (32) gemessenen Temperatur.

7. Kalibrierlichtquelle nach Anspruch 6, ferner mit einer Konstantstromquelle zum Versorgen der Halbleiterlichtquelle (18) mit einem konstanten Strom, wobei die Temperaturregelvorrichtung (42) derart eingerichtet ist, dass sie die Temperatur auf einem fest vorgegebenen Wert konstant hält.

8. Kalibrierlichtquelle nach einem der vorhergehenden Ansprüche, bei der die Halbleiterlichtquelle (18) mehrere High-Power LEDs (44) umfasst, die zusammen mit dem Temperatursensor (32) auf einem Chip-Array (46) angeordnet sind.

9. Kalibrierlichtquelle nach einem der vorhergehenden Ansprüche, bei der die aktive Kühlvorrichtung (30) ein Peltierelement umfasst.

10. Kalibrierlichtquelle nach einem der vorhergehenden Ansprüche, bei der das Austrittsöffnungshalterungselement (14) ein Hohlkörper mit geschlossener Seitenwand und offener Lichtaustrittsöffnung (15) ist.

11. Kalibrierlichtquelle nach einem der vorhergehenden Ansprüche, bei der ein optisch transparentes Fenster aus Glas, Quarz oder einem anderen optisch transparenten Material in der Lichtaustrittsöffnung (15) sitzt.

## Claims

1. A calibration light source (2) comprising:
a housing (4) having an opening (12),
a board (22) held in the housing (4),
a semiconductor light source (18) mounted to the board (22), the semiconductor light source to generate a light beam,
an exit opening support element (14) held by the board (22) of the semiconductor light source (18) having, in the area of the opening (12), a light exit opening (15), functioning as an aperture through which the light beam generated by the semiconductor light source (18) radiates outwards from the housing (4),
an active cooling device (30) connected to the board (22) and held in the housing (4), the active cooling device to cool the semiconductor light source (18),
a first thermally conductive connecting element (28) held in the housing (4) which connects the cold side of the cooling device (30) with the board (22) of the semiconductor light source (18) and conveys heat away from the semiconductor light source (18) to the cooling device (30),
a second thermally conductive connecting element (34) held in the housing (4), which is connected to the hot side of the cooling device (30),
wherein the second connecting element (34) is held against the housing (4) by a thermally isolating holder (38), and
wherein the exit opening support element (14) and the semiconductor light source (18) are mechanically and thermally decoupled from the housing (4).

2. The calibration light source of claim 1, wherein a diffuser (12) is provided in the light exit opening (15).

3. The calibration light source of claim 1 or 2, wherein the semiconductor light source (18) comprises a High-Power LED.

4. The calibration light source of anyone of claims 1 to 3, further comprising:
a heat sink (36) attached to the end of the second connecting element (34) facing away from the cooling device (30) having an enlarged heat exchange surface to disperse the heat into the ambient air, and
a fan (40) to carry heated ambient air away from the heat sink (36).

5. The calibration light source of anyone of the preceding claims, in which the housing (4) and the exit opening support element (14) are made of a material having good heat insulating properties.

6. The calibration light source of anyone of the preceding claims, further comprising:
a temperature sensor (32) arranged in direct proximity to the semiconductor light source (18) to measure the temperature of the semiconductor light source (18), and
a temperature regulator (42) to regulate the power supplied to the active cooling device (30) as a function of the temperature measured by the temperature sensor (32).

7. The calibration light source of claim 6, further comprising:
a constant current source to supply the semiconductor light source (18) with constant current, wherein the temperature regulator (42) is arranged to keep the temperature constant at a fixed specified value.

8. The calibration light source of anyone of the preceding claims, wherein the semiconductor light source (18) comprises a plurality of High-Power LEDs (44) arranged on a chip array (46) together with the temperature sensor (32).

9. The calibration light source of anyone of the preceding claims, wherein the active cooling device (30) comprises a Peltier element.

10. The calibration light source of anyone of the preceding claims, wherein the exit opening support element (14) is a hollow body having a closed sidewall and an open light exit opening (15).

11. The calibration light source of anyone of the preceding claims, wherein an optically transparent window made of glass or quartz or another optically transparent material is provided in the light exit opening (15).

## Revendications

1. Source de lumière d'étalonnage (2), comprenant :
un boîtier (4) présentant une ouverture (12),
un support (22) logé dans le boîtier (4),
une source de lumière à semi-conducteurs (18) portée par le support (22) et destinée à produire un faisceau lumineux,
un élément de retenue d'orifice de sortie (14) fixé au support (22) de la source de lumière à semi-conducteurs (18) et comprenant un orifice de sortie de lumière (15) agencé au niveau de l'ouverture (12), fonctionnant comme une ouverture, et par lequel le faisceau de lumière produit par la source de lumière à semi-conducteurs (18) sort du boîtier (4) et est émis vers l'extérieur,
un dispositif de refroidissement (30) actif relié au support (22), logé dans le boîtier (4) et servant à refroidir la source de lumière à semi-conducteurs (18),
un premier élément de liaison (28) thermo-conducteur qui est logé dans le boîtier (4), qui relie la face froide du dispositif de refroidissement (30) au support (22) de la source de lumière à semi-conducteurs (18) et qui évacue la chaleur de la source de lumière à semi-conducteurs (18) vers le dispositif de refroidissement (30), et
un deuxième élément de liaison (34) thermo-conducteur qui est logé dans le boîtier (4) et qui est relié à la face chaude du dispositif de refroidissement (30),
le deuxième élément de liaison (34) étant retenu sur le boîtier (4) au moyen d'un dispositif de retenue (38) thermo-isolant, et
l'élément de retenue d'orifice de sortie (14) et la source de lumière à semi-conducteurs (18) étant découplés mécaniquement et thermiquement du boîtier (4).

2. Source de lumière d'étalonnage selon la revendication 1, dans laquelle un diffuseur (12) repose dans l'orifice de sortie de lumière (15).

3. Source de lumière d'étalonnage selon la revendication 1 ou 2, dans laquelle la source de lumière à semi-conducteurs (18) comprend une diode électroluminescente haute puissance.

4. Source de lumière d'étalonnage selon l'une quelconque des revendications 1 à 3, comprenant en outre :
un corps de refroidissement (36) relié à l'extrémité du deuxième élément de liaison (34) opposée au dispositif de refroidissement (30) et présentant une surface d'échange de chaleur agrandie servant à délivrer la chaleur dans l'air ambiant, et
un ventilateur (40) servant à évacuer l'air ambiant chauffé du corps de refroidissement (36).

5. Source de lumière d'étalonnage selon l'une quelconque des revendications précédentes, dans laquelle le boîtier (4) et l'élément de retenue d'orifice de sortie (14) sont faits d'un matériau à isolation thermique satisfaisante.

6. Source de lumière d'étalonnage selon l'une quelconque des revendications précédentes, comprenant en outre :
un capteur de température (32) agencé à proximité immédiate de la source de lumière à semi-conducteurs (18) et servant à mesurer la température de la source de lumière à semi-conducteurs (18), et
un dispositif de régulation de température (42) servant à réguler la puissance du dispositif de refroidissement (30) actif en fonction de la température mesurée par le capteur de température (32).

7. Source de lumière d'étalonnage selon la revendication 6, comprenant en outre une source de courant constante servant à alimenter la source de lumière à semi-conducteurs (18) en courant constant, le dispositif de régulation de température (42) étant conçu de telle manière qu'il maintient la température constante à une valeur prédéfinie de manière fixe.

8. Source de lumière d'étalonnage selon l'une quelconque des revendications précédentes, dans laquelle la source de lumière à semi-conducteurs (18) comprend plusieurs diodes électroluminescentes haute puissance (44) qui sont agencées conjointement avec le capteur de température (32) sur un ensemble de puces (46).

9. Source de lumière d'étalonnage selon l'une quelconque des revendications précédentes, dans laquelle le dispositif de refroidissement (30) actif comprend un élément Peltier.

10. Source de lumière d'étalonnage selon l'une quelconque des revendications précédentes, dans laquelle l'élément de retenue d'orifice de sortie (14) est un corps creux présentant une paroi latérale fermée et un orifice de sortie de lumière (15) ouvert.

11. Source de lumière d'étalonnage selon l'une quelconque des revendications précédentes, dans laquelle une fenêtre optiquement transparente en verre, en quartz ou faite d'un autre matériau optiquement transparent repose dans l'orifice de sortie de lumière (15).
